## Europäisches Patentamt
## European Patent Office
## Office européen des brevets

(11) Publication number: **0 005 892**
**B1**

(12) **EUROPEAN PATENT SPECIFICATION**

(45) Date of publication of patent specification: **01.07.81**

(51) Int. Cl.³: **F 16 H 55/17, B 62 D 55/12**

(21) Application number: **79300472.2**

(22) Date of filing: **23.03.79**

(54) Self cleaning toothed wheel.

(30) Priority: **26.05.78 US 909760**

(43) Date of publication of application:
**12.12.79 Bulletin 79/25**

(45) Publication of the grant of the European patent:
**01.07.81 Bulletin 81/26**

(84) Designated Contracting States:
**FR GB IT**

(56) References cited:
US - A - 1 853 308
US - A - 3 068 711
US - A - 3 880 478
US - A - 4 042 282

(73) Proprietor: **CATERPILLAR TRACTOR CO.**
**100 Northeast Adams Street**
**Peoria Illinois 61629 (US)**

(72) Inventor: **Boggs, Roger L.**
**106 W. Autumn**
**East Peoria Illinois 61611 (US)**
Inventor: **Christensen, Jon Charles**
**1127 W. Sycamore Street**
**Chillicothe Illinois 61523 (US)**

(74) Representative: **Jackson, Peter Arthur et al,**
**GILL JENNINGS & EVERY 53 to 64, Chancery Lane**
**London WC2A 1HN (GB)**

Courier Press, Leamington Spa, England.

Self cleaning toothed wheel.

In the use of wheels having teeth around their rims, it is desirable that the root areas between the teeth be kept clean of material in order to prevent improper engagement of the wheel and its mating part.

Wheels of this type are commonly used as sprockets on track-laying vehicles to drive the endless crawler track and propel the vehicle. A typical application is in an environment of wet or closely packed materials. As the wheel and track move, loose material tends to collect in the root areas between teeth on the wheel. In response to repeated engagement of tooth and track bushing, the material can remain and become tightly packed into the root areas. This can cause a mismatch of track and wheel.

Packing of the root areas changes the pitch of the track and forces the track bushings to ride upon the tip of the teeth. This can result in increased wear, reduced track life, and other damage to the drive train. Further, the track can eventually jump from the teeth. This represents a waste of time and labour. Therefore, it is desirable to provide a method of cleaning the root areas between the teeth during operation of the work vehicles.

One proposed solution to this problem is described in U.S. Specification No. 3,068,711 which discloses a sprocket wheel provided with an annular opening extending along the rim of the wheel and in communication with root areas of the teeth. In operation, loose material collects in the annular opening, is compressed by the track, and is pushed out of the opening through apertures provided around the sprocket flange annuli. However, this proposal still suffers from the disadvantage that material can collect in the root areas between adjacent teeth.

According to the invention, a wheel has a rim provided with a ring of radially outwardly projecting teeth arcuately spaced from one another by root areas which define a root diameter, and an annular opening extending along the rim in communication with the root areas and having an inner diameter less than the root diameter; characterised by a hoop loosely positioned in the annular opening and having an outer diameter greater than the root diameter and an inner diameter greater than the inner diameter of the annular opening; the arrangement being such that when the teeth are in rolling engagement with mating part, at that part of the rim in engagement with the mating part the hoop is pressed radially inwardly in the opening, while at another part of the rim the hoop moves bodily radially outwardly in the opening to lift any foreign material from the adjacent root areas.

The invention is applicable to a variety of toothed wheels, such as gear wheels, but is particularly useful when applied to crawler track sprockets.

Some examples of a track-laying vehicle having a crawler sprocket constructed in accordance with the invention are illustrated in the accompanying drawings, in which:—

Figure 1 is a diagrammatic side view of part of one vehicle;

Figure 2 is a diagrammatic perspective view showing part of the sprocket of the Figure 1 vehicle in greater detail;

Figure 3 is a diagrammatic cross sectional view of the crawler track and sprocket of the Figure 1 vehicle;

Figure 4 is a diagrammatic view similar to Figure 2 but showing another example;

Figure 5 is a diagrammatic side view showing the sprocket of another example; and,

Figure 6 is a diagrammatic view similar to Figure 2 but showing still another example.

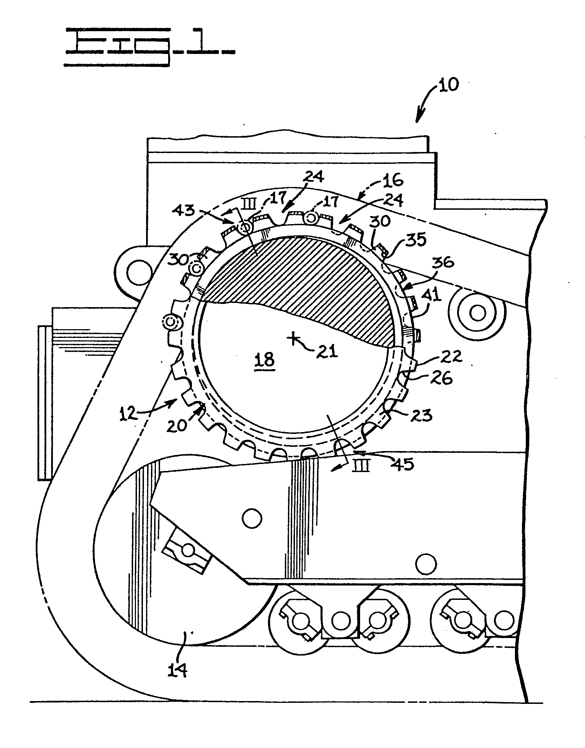

Referring to Figure 1, as is well known in the art, a track-laying vehicle 10 has a drive sprocket wheel 12, idler 14, and an endless track 16. The track has bushings 17. The wheel has a hub 18, rim 20, axis of rotation 21, and teeth 22. The wheel 12 is used to drive the continuous track 16 and propel the vehicle 10.

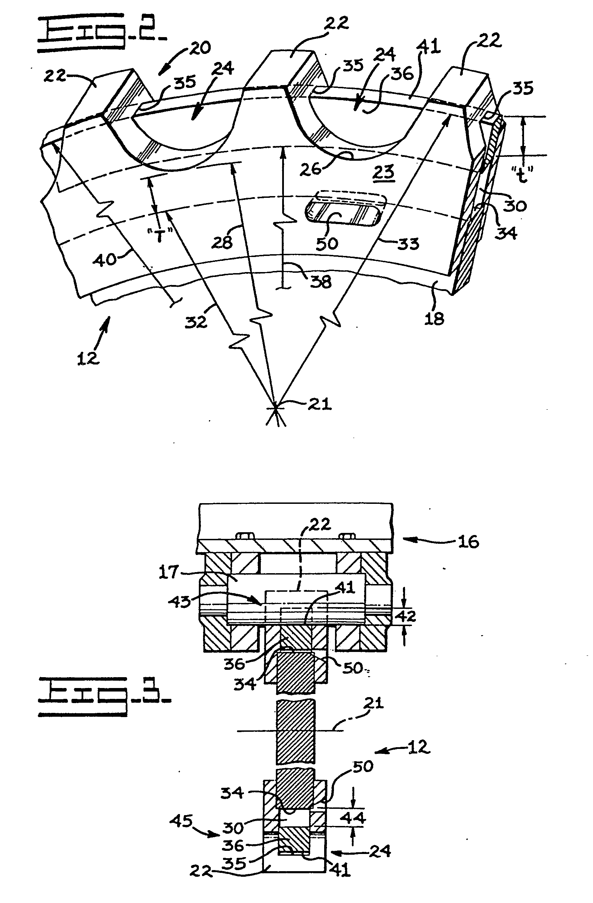

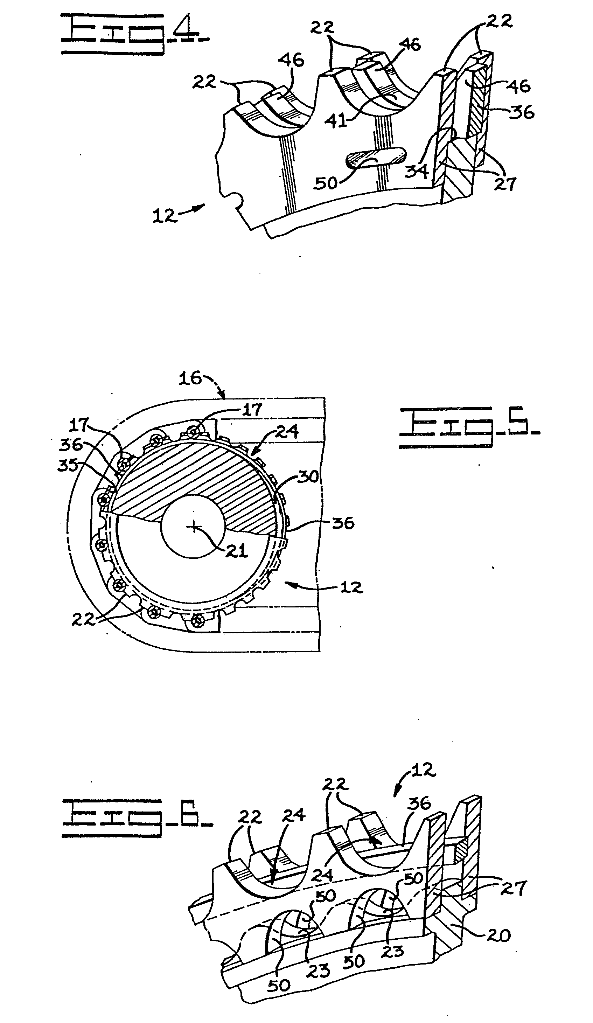

Referring to Figures 1 and 2, the teeth 22 are positioned about the outer surface 23 of the rim 20 and are arcuately spaced one from the other by root areas 24. The root areas 24 have an outer periphery 26 and define a root diameter 28. The teeth 22 can be of other construction, such as being detachably connected to the rim 20 and positioned in substantially parallel axially spaced apart rows 27 of component teeth, as shown in Figure 4. The annular opening 30 is then an annular slot between the rows 27.

As shown in Figure 2, the wheel 12 has an annular opening 30 having inner and outer diameters 32, 33 and inner and outer surfaces 34, 35. The opening 30 is in communciation with the outer periphery 26 of the root areas 24. A hoop 36 having inner and outer diameters 38, 40 is positioned in the annular opening 30. The hoop 36 has an outer surface 41. The outer diameter 40 of the hoop 36 is greater than the root diameter 28. Preferably, the root diameter 28 reduced by the annular opening inner diameter 32 i.e. the depth of the annular opening radially inwardly of the root diameter 28, is at least as great as the hoop outer diameter 40 reduced by the hoop inner diameter 38, i.e. the radial thickness of the hoop. In other words, thickness (T) is at least as great as thickness (t). By this construction, the contacted portion of the hoop outer surface 41 can be urged to a position at which that portion of the outer surface 41 of the hoop 36 is substantially flush with the outer periphery 26 of the root areas 24 upon rolling engagement of the wheel with the track 16 during operation of the vehicle 10.

The hoop 36 can be of a substantially rigid construction so that upon being forcibly urged to make a first displacement 42 at a first location 43 on the hoop 36, the hoop moves bodily and a substantially similar second displacement 44 occurs at a second opposed location 45 on the hoop 36. Therefore, referring to Figures 1 and 3, the hoop 36 is displaced to a location that is not concentric to the axis 21 in response to contact of the hoop 36 by the track 16.

Referring to Figure 5, the hoop 36 can also be of a flexible resilient construction so that it normally tends to urge itself forcibly against the annular opening outer surface 35 but being locally forcibly flexed towards the axis 21 in response to contact by the track 16. The hoop 36 is generally radially movable in the annular opening 30 adjacent the root area 24 at which the hoop 36 is contacted by the track 16.

Referring to Figure 4, the hoop 36 can have radially outwardly projecting teeth 46 positioned about its outer surface 41. It is desirable that the teeth 46 be of a number at least equal to the number of teeth 22 on the wheel 12. Hoop teeth 46 in excess of the number of wheel teeth 22 provides rotation or partial rotation of the hoop 36 relative to the wheel 12 during rotation of the wheel 12 and engagement of the track 16. This relative movement of the hoop 36 can also be provided by hoop teeth 46 being of a greater size than teeth 22 of the wheel 12.

It is desirable to provide relief openings 50 in the wheel 12 for discharge of material otherwise trapped between the hoop 36 and inner surface of the annular opening 30. As shown in Figures 3 and 4, such relief openings 50 lead from the inner surface 34 of the annular opening 30 to the face of the wheel, in positions adjacent to the root areas.

Referring to Figure 6, in a wheel 12 with teeth 22 provided in spaced apart rows 27, the relief openings 50 can be adjacent each respective root area 24. Adjacent relief openings 50 in adjacent rows 27 are in communication with one another across the inner surface of the annular opening.

The relief openings 50 are in communication with the side faces of the wheel 12 in order for discharge of material.

In the operation of the wheel cleaning apparatus, the hoop 36 forcibly lifts against material located in the root areas 24 of the wheel 12. This action displaces the material, removing it from the root areas 24 of the teeth 22. Therefore, the tendency of material to pack in the root areas 24 and increase track pitch is substantially overcome.

For example, in the track-laying vehicle 10, the rotating drive wheel 12 engages the track 16 to drive the vehicle 10 (Figure 1). As the track 16 and wheel 12 engage, the hoop 36 is forced into the annular opening 30 by the track 16. Opposite portions of the hoop 36 are correspondingly displaced radially outwardly in the annular opening 30. More particularly, the hoop 36 is displaced a predetermined distance in the annular opening 30. This distance is dependent upon the inner and outer diameters 32, 33, 38, 40 of the annular opening 30 and of the hoop 36.

Where present, relief openings 50 help clean mud or dirt from adjacent the root areas 24 which can sometimes collect between the hoop 36 and wheel 12. The hoop 36 is urged into the annular opening 38 during engagement. This action tends to force such material through the relief openings 50 and away from the root areas 24 (Figures 3 and 5).

In another embodiment, the hoop 36 continuously forcibly urges against the outer surface 35 of the annular opening 30. The hoop 36 is displaced into the annular opening 30 during track engagement. As the track 16 disengages, the hoop 36 tends to return to the normal position against the outer surface 35, thereby displacing material placed in the root area 24 during track engagement.

## Claims

1. A wheel having a rim provided with a ring of radially outwardly projecting teeth (22) arcuately spaced from one another by root areas (24) which define a root diameter (28); and an annular opening (30) extending along the rim in communication with the root areas (24) and having an inner diameter less than the root diameter; characterised by a hoop (36) loosely positioned in the annular opening and having an outer diameter greater than the root diameter and an inner diameter greater than the inner diameter of the annular opening; the arrangement being such that when the teeth are in rolling engagement with a mating part, at that part of the rim in engagement with the mating part the hoop is pressed radially inwardly in the opening, while at another part of the rim the hoop moves bodily radially outwardly in the opening to lift any foreign material from the adjacent root areas.

2. A wheel according to claim 1, wherein the teeth (22) are provided by axially spaced, parallel, annular rows (27) of component teeth and the annular opening is an annular slot between the rows.

3. A wheel according to claim 2, wherein the hoop is provided with radially outwardly projecting teeth (46).

4. A wheel according to claim 3, wherein the hoop teeth (46) are of a number at least equal to the number of teeth (22) on the wheel.

5. A wheel according to any one of the preceding claims, wherein relief openings (50) are provided leading from the annular opening beneath the hoop to a face of the wheel.

6. A wheel according to claim 5 when dependent on any one of claims 2 to 4, wherein the relief openings extend through the spaced apart rows (27) adjacent to the root areas.

7. A wheel according to any one of the preceding claims, wherein the hoop (36) is substantially rigid so that it moves bodily when displaced, in use, relatively to the rest of the wheel by engagement with the mating part.

8. A wheel according to any one of claims 1 to 6, wherein the hoop is resiliently flexible and tends to engage an outer surface (35) of the annular opening unless locally flexed, in use, radially inwardly by engagement with the mating part.

9. A wheel according to any one of the preceding claims, wherein the radial depth (T) of the annular opening radially inwardly of the root diameter is at least as great as the radial thickness (t) of the hoop.

10. A crawler vehicle having a crawler track mating with a sprocket according to any one of the preceding claims.

**Revendications**

1. Roue comprenant une jante pourvue d'une couronne de dents (22) s'avançant radialement vers l'extérieur et espacées angulairement l'une de l'autre par des régions de base ou de racine (24) qui délimitent un diamètre de base (28); et une ouverture annulaire (30) s'étendant le long de la jante en communication avec les régions de base (24) et ayant un diamètre intérieur plus petit que le diamètre de base, caractérisée par un cercle (36) placé librement dans l'ouverture annulaire et ayant un diamètre extérieur plus grand que le diamètre de base et un diamètre intérieur plus grand que le diamètre intérieur de l'ouverture annulaire, la disposition étant telle que quand les dents sont en contact de roulement avec une pièce correspondante, le cercle est pressé radialement vers l'intérieur de l'ouverture, au niveau de la partie de la jante qui est en contact avec la pièce correspondante, tandis qu'à une autre partie de la jante, le cercle se déplace tout entier radialement vers l'extérieur dans l'ouverture afin de lever les matières étrangères des régions de base adjacentes.

2. Roue selon la revendication I, caractérisée en ce que les dents (22) sont disposées en rangées annulaires, parallèles et espacées axialement (27), l'ouverture annulaire étant constituée par une fente annulaire située entre les rangées.

3. Roue selon la revendication 2, caractérisée en ce que le cercle comporte des dents. (46) s'avançant radialement vers l'extérieur.

4. Roue selon la revendication 3, caractérisée en ce que le nombre des dents (46) du cercle est au moins égal à celui des dents (22) de la roue.

5. Roue selon l'une quelconque des revendications précédentes, caractérisée en ce que des ouvertures de dégagement (50) relient l'ouverture annulaire, sous le cercle, à une face de la roue.

6. Roue selon la revendication 5, en relation avec l'une quelconque ces revendications 2 à 4, caractérisée en ce que les ouvertures de dégagement traversent les rangées espacées (27), près de régions de base.

7. Roue selon l'une quelconque des revendications précédentes, caractérisée en ce que le cercle (36) est pratiquement rigide de sorte qu'il se céplace tout entier, en fonctionnement, par rapport au reste de la roue par suite du contact avec la pièce correspondante.

8. Roue selon l'une quelconque des revendications 1 à 6, caractérisée en ce que le cercle est élastiquement flexible et tend à venir en contact avec la surface extérieure (35) de l'ouverture annulaire à moins qu'il fléchisse localement, en fonctionnement, radialement vers l'intérieur par suite du contact avec la pièce correspondante.

9. Roue selon l'une quelconque des revendications précédentes, caractérisée en ce que la profondeur radiale (T) de l'ouverture annulaire dans la direction du diamètre de la base des dents est au moins égale à l'épaisseur radiale (t) du cercle.

10. Véhicule à chenilles comportant une bande de roulement coopérant avec une roue dentée selon l'une quelconque des revendications précédentes.

**Patentansprüche**

1. Ein einen Kranz aufweisendes Rad mit einem Ring von radial nach außen ragenden Zähnen (22), die bogenförmig mit Abstand voneinander durch Fußgebiete (24) angeordnet sind, welche einen Kranzdurchmesser (28) definieren, und mit einer sich entlang des Kranzes erstreckenden Ringöffnung (30), die in Verbindung steht mit den Fußgebieten (24) und einen Innendurchmesser aufweist, der kleiner ist als der Fußdurchmesser, gekennzeichnet durch einen lose in der Ringöffnung positionierten Reifen (36) mit einem Außendurchmesser größer als der Fußdurchmesser und mit einem Innendurchmesser größer als der Innendurchmesser der Ringöffnung, wobei die Anordnung derart getroffen ist, daß dann, wenn die Zähne in Rolleingriff mit einem damit zusammenpassenden Teil stehen, an diesem Teil des Kranzes in Eingriff mit dem zusammenpassenden Teil, der Reifen radial nach innen in die Öffnung gedrückt wird, wohingegen an einem anderen Teil des Kranzes der Reifen sich körperlich radial nach außen in der Öffnung bewegt, num jedwedes Fremdmaterial aus den benachbarten Fußgebieten herauszuheben.

2. Rad nach Anspruch 1, worin die Zähne (22) vorgesehen sind durch axial mit Abstand angeordnete, parallele, ringförmige Reihen (27) aus Komponenten-Zähnen, und daß die Ringöffnung ein ringförmiger Schlitz zwischen den Reihen ist.

3. Rad nach Anspruch 2, worin der Reifen mit radial nach außen ragenden Zähnen (46) ausgestattet ist.

4. Rad nach Anspruch 3, worin die Reifenzähne (46) eine Anzahl mindestens gleich der Anzahl der Zähne (22) des Rades besitzen.

5. Rad nach irgendeinem der vorhergehenden Ansprüche, worin Freigabeöffnungen (50) vorgesehen sind, die von der ringförmigen Öffnung unterhalb des Reifens zu einer Stirnfläche des Rades führen.

6. Rad nach Anspruch 5 in Abhängigkeit von irgendeinem der Ansprüche 2 bis 4, worin die Freigabeöffnungen sich durch die mit Abstand angeordneten Reihen (27) benachbart zu den Fußgebieten erstrecken.

7. Rad nach irgendeinem der vorhergehenden Ansprüche, worin der Reifen (36) im wesentlichen starr ist, so daß er sich körperlich bewegt, wenn er im Gebrauch relativ zum Rest des Rades durch Eingriff mit dem damit zusammenpassenden Teil versetzt wird.

8. Rad nach einem der Ansprüche 1 bis 6, worin der Reifen elastisch flexibel ist und die Tendenz besitzt, mit einer Außenoberfläche (35) der ringförmigen Öffnung in Eingriff zu kommen, wenn er nicht örtlich beim Gebrauch sich radial nach innen durch Eingriff mit dem zusammenpassenden Teil biegt.

9. Rad nach einem der vorhergehenden Ansprüche, worin die Radialtiefe (T) der Ringöffnung radial nach innen gegenüber dem Fußdurchmesser mindestens ebenso groß ist wie die Radialdicke (t) des Reifens.

10. Kettenfahrzeug mit einer Kettenfahrzeugkette, die mit einem Kettenrad gemäß irgendeinem der vorhergehenden Ansprüche zusammenpassend angeordnet ist.

Fig.1.

0 005 892

FIG.2

FIG.3

2

0 005 892

3